# EUROPEAN PATENT APPLICATION

(11) **EP 4 480 757 A1**
(43) Date of publication of application: **25.12.2024**
(21) Application number: 23180810.6
(22) Date of filing: 22.06.2023
(51) Int. Cl.: B60R 11/04

(54) **CAMERA ASSEMBLY FOR A DRIVER MONITORING SYSTEM**

(71) Applicant: Magna Electronics Sweden AB, 447 37 Vårgårda (SE)
(72) Inventor: HOMUTESCU, Adrian, 700051 Iasi (RO); CAZACU, Vlad, 700051 Iasi (RO)
(74) Representative: Reichert & Lindner Partnerschaft Patentanwälte

(57) **Abstract**

A camera assembly (10) for a driver monitoring system (1) has a bottom z-locator frame part (24) having formed at least two recesses (23) in a base (27) of the bottom z-locator frame part (24). To achieve a poka-yoke solution, at least two ribs (30) of the camera assembly (10) are received by the recesses (23) once the camera assembly (10) is attached to the bottom z-locator frame part (24) in a correct position. The first frame part (20) remains unchanged.

## Description

### FIELD OF THE INVENTION

The invention relates to a camera assembly for a driver monitoring system (DMS). More particularly, the invention relates to a camera assembly for a driver monitoring system, wherein the camera assembly is defined by a front housing shell and a back housing shell. A surrounding edge of the front housing shell has formed at least two top z-locators, at least two bottom z-locators, a first fixation element and a second fixation element. The first fixation element reaches into a snap window and the second fixation element reaches into an opposing snap window of a first frame part.

### DESCRIPTION OF THE BACKGROUND ART

WO2022/217620 A1 discloses a camera for a driver monitoring system. The camera has a housing, which can be mounted to a holder.

EP 3 982 197 A1 relates to a driver monitoring system with a camera. The camera is positioned in or at an outer housing and points to an outside of the outer housing.

The camera is held by a housing cover and a housing base.

As known from prior art, the driver's focus and/or the general ability to drive are assessed by the driver monitoring system. At least one camera is positioned conveniently in the vicinity of the driver such that at least one optical device (for example, sensor and lens package) is directed to the driver's face. Some general market trends are described hereafter. The camera should be designed in such a way that no additional parts such as screws and no work steps such as screwing are required when installing the camera in vehicle. Furthermore, the camera should be able to be positioned and mounted in the vehicle with, at best, one single operator handling. In addition, minimal forces (~ under 75 N) should be required to install the camera in the vehicle. Reverse installation should be possible, if required, so that mirror-image vehicles can be manufactured with the same camera design, for example for left-hand and right-hand drive vehicles. In addition, accidental installation in postures other than intended for a particular vehicle (that is upside down) should be prevented. However, conventional driver monitoring systems do not meet the last requirement, do not have explicit locators, and therefore may cause collision between the camera assembly of the conventional DMS and a frame part during installation of the camera assembly and the frame part or may even result in faulty installations.

### SUMMARY OF THE INVENTION

It is an object of the present invention to provide a camera assembly for a driver monitoring system, wherein the camera assembly requires minimal forces for installation, is always installed in the correct operating position, and requires no additional tools for installation.

The above object is achieved by an assembly for a driver monitoring system according to the features of claim 1.

According to an embodiment, the camera assembly for a driver monitoring system is defined by a front housing shell and a back housing shell. A surrounding edge of the front housing shell has formed at least two top z-locators, at least two bottom z-locators, a first fixation element and a second fixation element. The first fixation element reaches into a snap window and the second fixation element reaches into an opposing snap window of a first frame part. At least two ribs are formed on a surrounding edge of the back housing shell. A bottom z-locator frame part, for receiving the camera assembly, is defined by a base (bottom) and two snaps extending upwardly from the base. Each snap has formed therein a snap window into which the first fixation element and the second fixation element respectively reach. At least two recesses are formed in the base, each of which receiving one of the at least two ribs once the camera assembly is attached to the bottom z-locator frame part.

The recesses in the base (bottom) of the z-locator frame part and the ribs on the surrounding edge of the back housing shell form a poka-yoke design. The advantage of this embodiment is that incorrect installation of the camera assembly in the first frame part or the bottom z-locator frame part is prevented by this poka-yoke design. In addition, the installation is simple and does not require any special tools.

According to an embodiment of the invention channels are formed in the front housing shell of the camera assembly. The channels are used for locating the camera assembly in the X-coordinate direction and the Y-coordinate direction. With the channels a defined mounting of the camera assembly is possible.

Adding ribs or bumps (see below) to the top side of the camera assembly, especially to the surrounding edge of the back housing shell, does not require a change to the first frame part. As described above, the recesses in the bottom of the z-locator frame part interact in a poka-yoke manner with the ribs on the surrounding edge of the back housing shell. This cooperation prevents conflicts of the camera assembly with a locating space on the housing in a Z-coordinate direction.

According to a further embodiment, the base of the bottom z-locator frame part has formed at least two plateaus. Each plateau contacts one of the bottom z-locators on the surrounding edge of the front housing shell once the camera assembly is in the correct and desired operating position. The advantage of the plateaus is that additional stability of the mount is created when the plateaus are in contact with the bottom z-locators of the front housing shell.

According to another embodiment, at least one bump is formed on the base of the bottom z-locator frame part in addition to the recesses. Accordingly, the surrounding edge of the back housing shell has at least one deepening formed therein. In case the camera assembly is installed in the correct way, the at least one bump reaches into the at least one deepening and the camera assembly is stably seated on the bottom z-locator frame part. The cooperating deepenings and bumps provide additional help for correct installation of the camera assembly into the Z-direction. Preferably, the at least one bump of the base of the bottom z-locator frame part is in form fitting cooperation with the at least one deepening of the surrounding edge of the back housing shell. The bump and deepening can as well be in airgap.

As a general design objective, a poka-yoke design is required to prevent reversed camera installation on all potential bottom Z-locating frames. In the present invention, this is achieved by adding bumps (at least one) on the base of the bottom z-locator frame part and deepenings (at least one) to the surrounding edge of the back housing shell (at the bottom of the camera assembly) or to the housing of the camera assembly.

Attempts to install the camera in reverse in the Z-locating frame part results in that the Z-locators (especially top z-locators) and the plateaus of the base of the bottom z-locator frame part are not being able to touch each other. Moreover, the first fixation element and a second fixation element (for example, triangular prisms) do not reach the final position in the snap frame windows of the snaps. The incorrect (reverse) installation of the camera assembly is blocked after a first contact of one rib with the first frame part. Reverse installation of the camera assembly is not possible due to collision of the ribs with the first frame part or the bumps on the base of the bottom z-locator frame part with the camera housing.

In one embodiment, a driver monitoring system for a vehicle comprises a camera assembly according to any of the previous embodiments.

### BRIEF DESCRIPTION OF THE DRAWINGS

The numerous advantages of the disclosure may be better understood by those skilled in the art by reference to the accompanying figures in which:
**Figure 1** is a schematic representation of an embodiment of the placement of a driver monitoring system camera inside a vehicle.
**Figure 2** is a perspective view of the front side of an embodiment of a camera assembly.
**Figure 3** is a perspective view on the bottom side of the camera assembly as shown in Fig. 2.
**Figure 4** shows an insertion process of the camera assembly of Figs 2 and 3 into a frame for mounting the camera assembly.
**Figure 5** shows the mounting of the camera assembly in the frame in an incorrect position.
**Figure 6** shows the positioning of an embodiment of the camera assembly according to the invention in a first frame part for holding the camera assembly.
**Figure 7** shows the prevention of an incorrect positioning of the camera assembly according to the invention in the first frame part.
**Figure 8** is a perspective front view of an embodiment of the camera assembly according to the invention.
**Figure 9** is a perspective top view of the embodiment of the camera assembly according to the invention as shown in Fig. 8.
**Figure 10** is a perspective view of an embodiment of the bottom z-locator frame part for holding and positioning the camera assembly according to the invention.
**Figure 11** shows the camera assembly according to the invention positioned in the frame.
**Figure 12** is a perspective view of a further embodiment of the bottom z-locator frame part for holding and positioning the camera assembly according to the invention.
**Figure 13** is a perspective top view of a further embodiment of the camera assembly according to the invention, which can be mounted with the embodiment of the bottom z-locator frame part of Fig 12.
**Figure 14** shows the further embodiment of the camera assembly according to the invention positioned in the embodiment of the frame as shown in Fig. 12.
**Figure 15** is a partially cut-away view of the camera assembly positioned incorrectly in the bottom z-locator frame part of Fig. 12.
**Figure 16** shows an insertion process of camera assembly that implies pure rectilinear translation of the camera towards the frame.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference in the course of the present description to "an embodiment" or "one embodiment" means that a particular structure, peculiarity, or characteristic described in connection with its implementation is comprised in at least one embodiment. Hence, phrases such as "in an embodiment" or "in one embodiment" that may recur in various points of the present description do not necessarily refer to one and the same embodiment. Furthermore, the particular structures, peculiarities, or characteristics may be combined in any convenient way in one or more embodiments.

Same reference numerals refer to same elements or elements of similar function throughout the various figures. Furthermore, only reference numerals necessary for the description of the respective figure are shown in the figures. The shown embodiments represent only examples of how the invention can be carried out. This should not be regarded as a limitation of the invention.

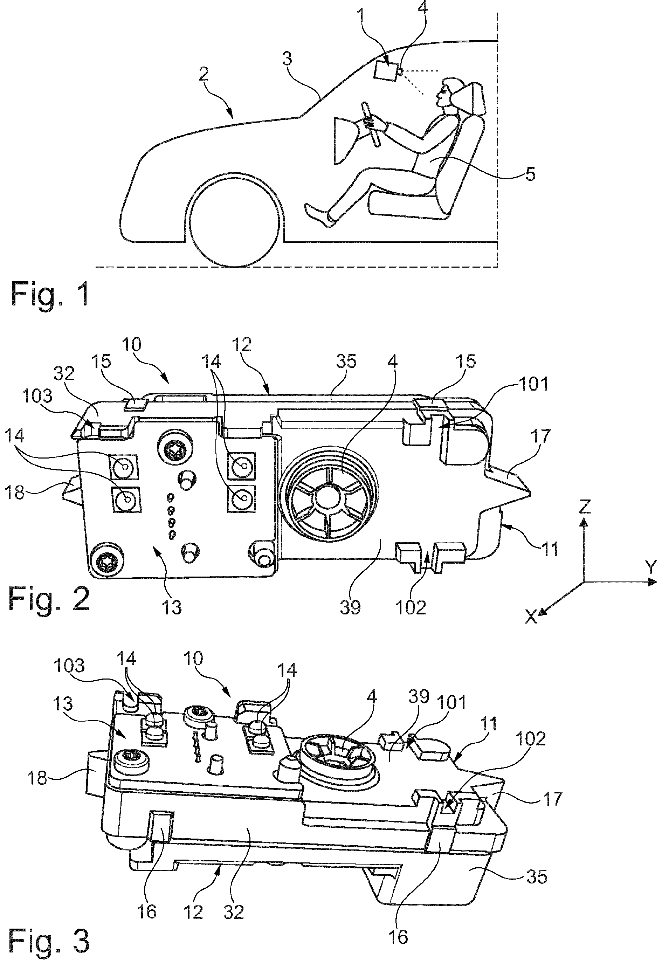

**Fig. 1** shows an embodiment of an arrangement of a driver monitoring system 1 inside a motor vehicle 2. Driver monitoring system 1 is mounted on or in the vicinity of a windshield 3 of motor vehicle 2, so that at least one vision device of driver monitoring system 1 is directed towards (in the sense of "looking at") a driver 5 of motor vehicle 2. In particular, a lens 4 of vision device, which is, for example, a vision camera, is directed towards driver 5.

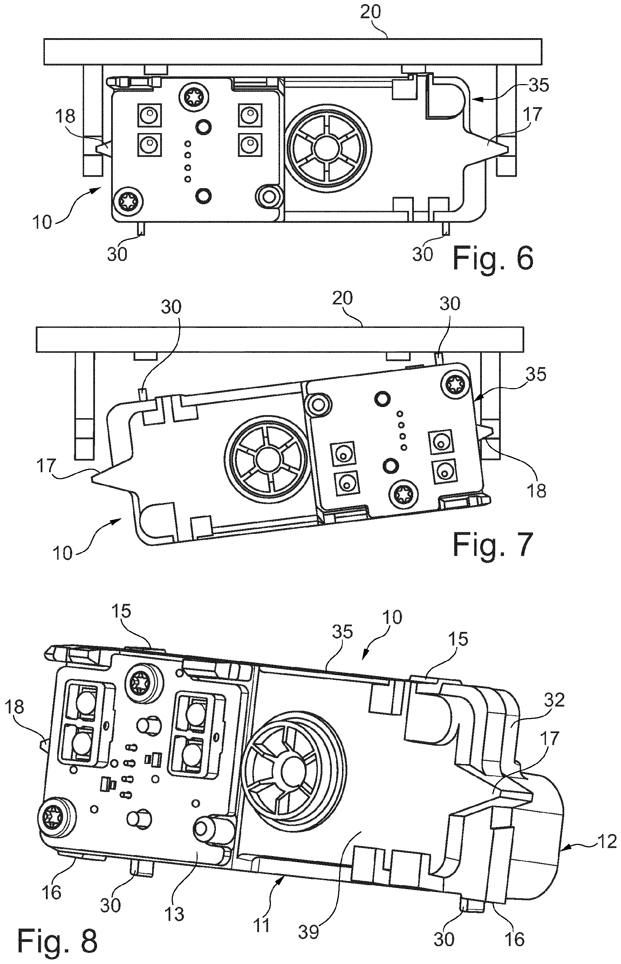

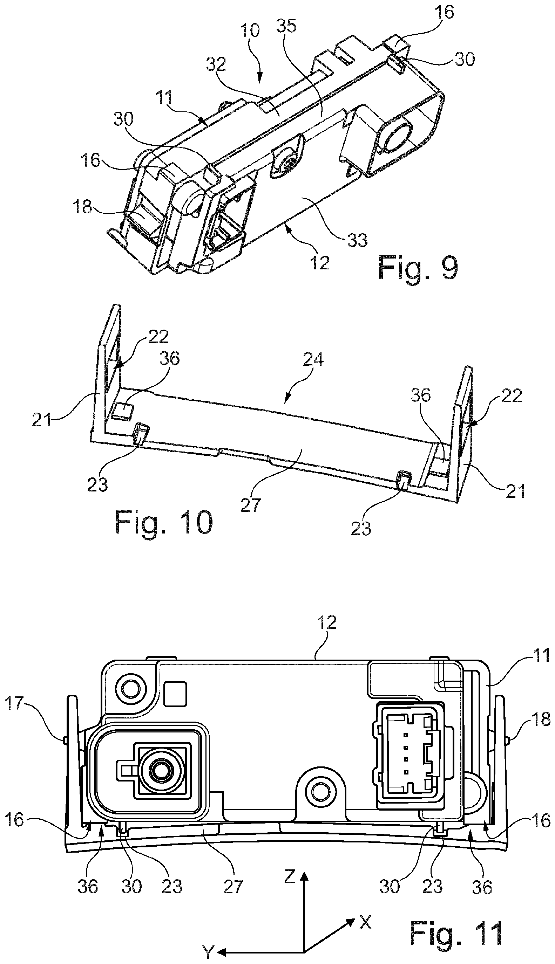

**Fig. 2** is a perspective view of the front side of an embodiment of a camera assembly 10. **Fig. 3** is a perspective view of the bottom side of the camera assembly 10 as shown in Fig. 2. Camera assembly 10 is defined by a front housing shell 11 and a back housing shell 12. Front housing shell 11 has a surrounding edge 32 and back housing shell 12 has a surrounding edge 35. A first fixation element 17 and a second fixation element 18 are formed on the front housing shell 11 at surrounding edge 32, which point in opposite directions. First fixation element 17 and second fixation element 18 are used to mount camera assembly 10 in a first frame part 20 (see Fig. 6) and/or a bottom z-locator frame part 24 (see Fig. 10).

Surface 39 of front housing shell 11 is equipped with a lens 4 and carries a circuit board 13 on which illumination devices 14 are installed. In addition, surrounding edge 32 of front housing shell 11 has top z-locators 15 and bottom z-locators 16.

The top z-locators 15 and bottom z-locators 16 extend beyond surrounding edge 32 of front housing shell 11. Front housing shell 11 is connected to surrounding edge 35 of back housing shell 12 via the surrounding edge 32, thereby forming a closed housing for the camera assembly 10.

As shown in Fig. 2 and 3 channels 101, 102, 103 in front housing shell 11 locate the camera assembly 10 in the Y coordinate direction Y. Middle planes between sides of the channels 101, 102, 103 locate the camera assembly 10 in the X coordinate direction X.

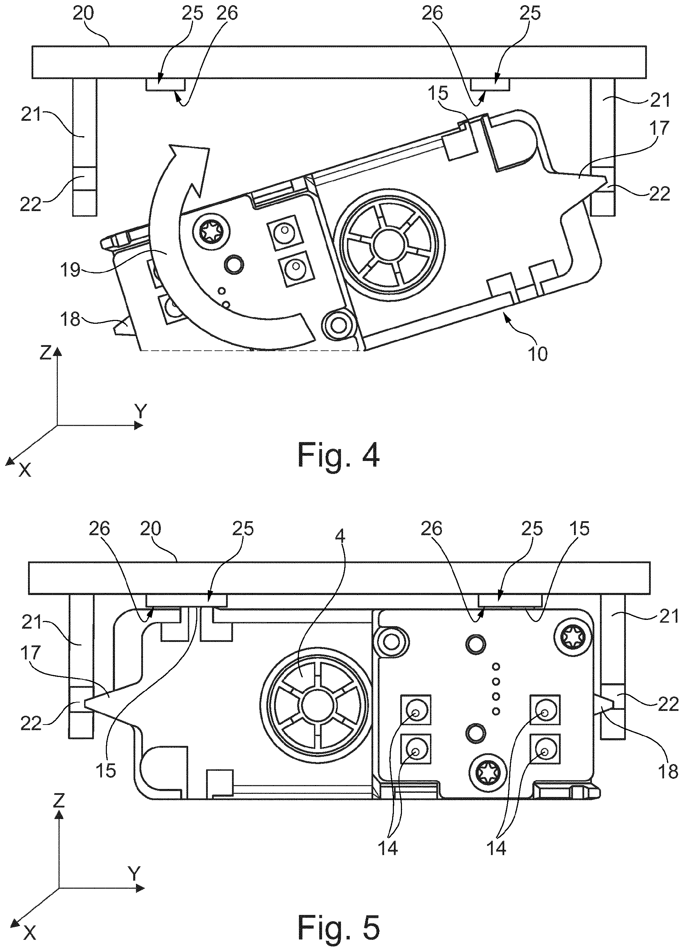

**Fig. 4** shows an insertion process of the prior art camera assembly 10 of Figs 2 and 3 into a first frame part 20. First fixation element 17 and second fixation element 18 are designed as triangular prisms which reach into a snap window 22 of the two opposing snaps 21 of first frame part 20. The snaps 21 may be made of an elastic, softer material, which is expediently part of the first frame part 20. The first frame part 20 may expediently be made of plastic. A mounting option for camera assembly 10 is shown in Fig. 4. Here, first fixation element 17 is inserted into snap window 22 of snap 21. With a pivoting motion 19, second fixation element 18 can be inserted into the snap window 22 of the opposing snap 21 of first frame part 20. When first fixation element 17 and second fixation element 18 have reached their final position, camera assembly 10, in particular the top z-locators 15, rest against, i.e. are in contact with, faces 26 of the stops 25 of first frame part 20. The snap windows 22 push camera assembly 10 toward stops 25 and thus fix camera assembly 10 to first frame part 20. The pivoting motion, as described in Fig. 4, for the insertion of the camera assembly 10 into the first frame part 20 should not be regarded as a limitation of the invention. The of the camera assembly 10 into the first frame part 20 can be carried out as well by a pure translational motion.

**Fig. 5** shows the mounting of the prior art camera assembly 10 in the first frame part 20 in an incorrect position. Even with the incorrect installation of camera assembly 10, the faces 26 of stops 25 of first frame part 20 are in contact with the top z-locators 15 of surrounding edge 32 of front housing shell 11 of camera assembly 10.

The consequence of the faulty installation is a displacement of the optical axis of lens 4 of camera assembly 10. The optical axis is no longer optimally aimed at the face of driver 5 and might be occluded. Also, the illumination devices 14, for example IR LEDs, are no longer optimally aligned with the face of driver 4 and might be occluded. Even if the positioning is incorrect, the camera assembly 10 is held in place by the snaps 21 of first frame part 20.

**Fig. 6** shows the positioning of an embodiment of the camera assembly 10 according to the invention in a first frame part 20 for holding the camera assembly 10. The camera assembly 10 has a surrounding edge 35 having at least two ribs 30. First fixation element 17 and second fixation element 18 are in cooperation with first frame part 20.

**Fig. 7** shows the prevention of an incorrect positioning of the camera assembly 10 according to the invention in the first frame part 20. Here, at least one rib 30 (e.g., the right rib 30 as shown in Fig. 7) contacts the first frame part 20 when the camera assembly 10 is inserted or positioned in the first frame part 20. The contact blocks the erroneous (reversed) installation of the camera assembly 10. Thus, an erroneous (reverse) installation of camera assembly 10 is not possible due to a collision between camera assembly 10 and first frame part 20.

**Fig. 8** is a perspective front view of an embodiment of the camera assembly 10 according to the invention. **Fig. 9** is a perspective top view of the embodiment of the camera assembly 10 according to the invention as shown in Fig. 8. As mentioned above, camera assembly 10 is defined by front housing shell 11 and back housing shell 12. Surrounding edge 32 of front housing shell 11 carries the top z-locators 15 and the bottom z-locators 16. In addition, surrounding edge 32 of front housing shell 11 carries the first fixation element 17 opposite the second fixation element 18.

Circuit board 13 is placed on surface 39 of front housing shell 11. Back housing shell 12 has two ribs 30 formed on the surrounding edge 35 of back housing shell 12 with respect to the bottom z-locators 16 on surrounding edge 32 of front housing shell 11. The number of ribs 30 is not to be construed as a limitation of the invention..

An embodiment of a bottom z-locator frame part 24 is shown in **Fig. 10****.** Bottom z-locator frame part has a base 27 with two opposing snaps 21. Each snap 21 has a snap window 22. Base 27 has formed two recesses 23, which are designed to receive the ribs 30 of back housing shell 12. In addition, base 27 has formed plateaus 36 that contact the bottom z-locators 16 of front housing shell 11 when camera assembly 10 is installed in the correct position in first frame part 20 (not shown here) and the bottom z-locator frame part 24, as shown in **Fig. 11****.** First fixation element 17 and second fixation element 18 reach into the respective snap windows 22 of the snaps 21.

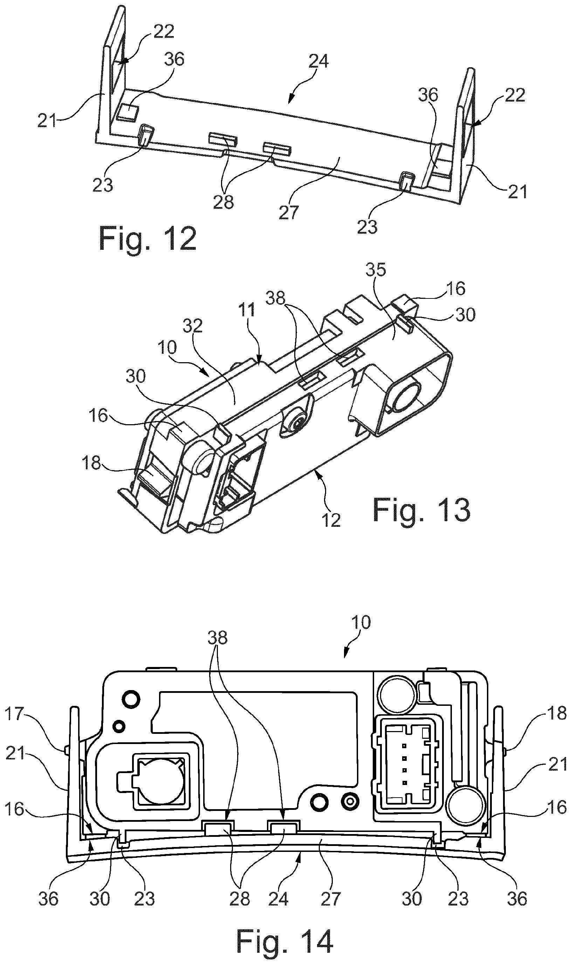

**Fig. 12** shows a further embodiment of the bottom z-locator frame part 24 for holding and positioning the camera assembly 10 according to the invention. In addition to the features already described with respect to the embodiment shown in

Fig. 10, base 27 of z-locator frame part 24 has formed two bumps 28. Again, the number of bumps 28 on base 27 is not to be construed as a limitation of the invention. It is obvious to a person skilled the art that even one bump 28 would be sufficient to hold camera assembly 10 in the correct position.

**Fig. 13** is a perspective top view of a further embodiment of camera assembly 10 according to the invention, which can be mounted with the embodiment of the bottom z-locator frame part 24 shown in Fig 12. Surrounding edge 35 of back housing shell 12 has two deepenings 38 formed between the ribs 30. As shown in

**Fig. 14****,** the bumps 28 on base 27 of bottom z-locator frame part 24 reach into the deepenings 38. The bumps 28 cooperate with the deepenings 38 in a form fitting manner.

The partial section view of camera assembly 10 and of bottom z-locator frame part 14 shows the interaction of the rib 30 with the recesses 23 and the deepenings 38 with the bumps 28. The interaction is only possible when camera assembly 10 is correctly positioned in bottom z-locator frame part 24. Furthermore, each plateau 36 formed on base 27 abuts the bottom z-locators 16 of front housing shell 11 when camera assembly 10 is installed in the correct position in bottom z-locator frame part 24. First fixation element 17 and second fixation element 18 reach into the respective snap windows 22 (see **Fig. 12**) of snaps 21.

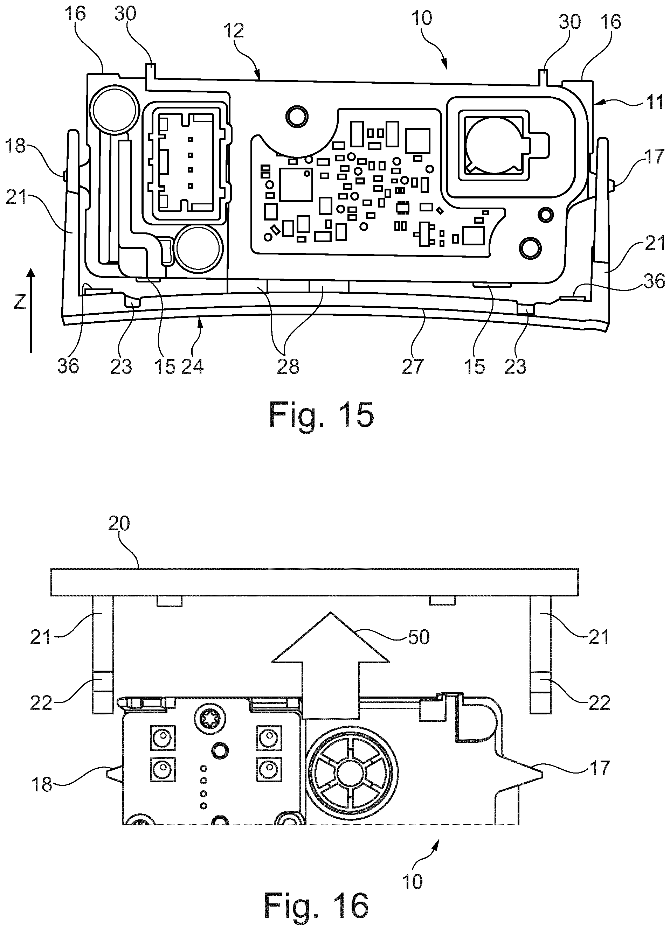

**Fig. 15** is a partially cut-away view of camera assembly 10 positioned incorrectly in bottom z-locator frame part 24 as shown in Fig. 12. Here, the bottom z-locators 16 of front housing shell 11 of camera assembly 10 do not contact the plateaus 36 of bottom z-locator frame part 24. In addition, the ribs 30 of back housing shell 12 do not reach into the recesses 23 of bottom z-locator frame part 24. The bumps 28 on base 27 of bottom z-locator frame part 24 abut back housing shell 12, but do not reach into the deepenings 38 (see **Fig. 13**) of back housing shell 12. First fixation element 17 and second fixation element 18 reach towards the snap windows 22 (see **Fig. 12**) of snaps 21 (in case assembly is done by a pure translational motion). However the first fixation element 17 and the second fixation element 18 cannot reach the height needed to enter the snap windows 22 fully. Snaps 21 are in interference as per relative position as shown in fig. 15. Some mechanical tension is created. Elastic energy being stored into snaps 21, however not released by the time the camera assembly 10 ceases to advance during the erroneous installation attempt. So when the operator ceases to push, the operator is able to sense a "rejection" reverse movement of the camera, that can serve as a feed-back that anything is wrong with the installation process. Thus, due to the incorrect positioning, bottom z-locator frame part 24 cannot reach a final position in the Z coordinate direction Z.

**Fig. 16** shows an insertion process of camera assembly 10 that implies pure rectilinear translation of the camera assembly 10 towards the first frame part 20. The camera assembly 10 is inserted along arrow 50. The insertion is finalized once the first fixation element 17 and the second fixation element 18 enter the snap windows 22 fully (see Fig. 6). Due to the correct installation no elastic energy being stored into snaps 21, which is an indication that the camera assembly 10 is mounted correctly. Similarly, the installation can be performed with the bottom z-locator frame part 24 (see Fig. 10).

Note that in general, the operators of camera assembly 10 cannot guess whether the camera resistance is high due to the normal installation and tolerances or due to reverse mounting, as both forces are very high in such cases (e.g., up to 75 N). Usually, the installed camera assembly 10 is behind an optical "filter" part that is impervious to natural light, so visual inspection of the resulting camera assembly and frame parts around is not possible. Therefore, camera assembly 10 according to the invention may have a plurality of different locators for all three Z, X, and Y directions on the housing portions of camera assembly 10, each of which cooperates with a frame part 20 or 24, to eliminate the prior art problems mentioned at the beginning:
- first fixation element 17 and second fixation element 18 on surrounding edge 32 of front housing shell 11 cooperating with corresponding snap windows 22 of two opposing snaps 21 of first frame part 20 in X-direction;
- ribs 30 on surrounding edge 35 of back housing shell 12 cooperating with corresponding recesses 23 in base 27 of bottom z-locator frame part 24 in Z-direction;
- deepenings 38 in surrounding edge 35 of back housing shell 12 cooperating with bumps 28 on base 27 of bottom z-locator frame part 24 in Z-direction; and
- top z-locators 15 and bottom z-locators 16 on surrounding edge 32 of front housing shell 11 cooperating with corresponding faces 26 of stops 25 of first frame part 20 in Z-direction.
- on Y direction, the camera locators can be the middle planes of the channels 101, 102 and 103 (the presence of the channels 101, 102 and 103 isvalid for all installation embodiments of the camera assembly 10), independently left and right or in cooperation.
- on X direction, the camera locators can be the bottom surfaces in the channels 101, 102 and 103.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### LIST OF REFERENCE NUMERALS

- 1: Driver monitoring system
- 2: Motor vehicle
- 3: Windshield
- 4: Lens
- 5: Driver
- 10: Camera assembly
- 11: Front housing shell
- 12: Back housing shell
- 13: Circuit board
- 14: Illumination device
- 15: Top z-locators
- 16: Bottom z-locators
- 17: First fixation element
- 18: Second fixation element
- 19: Pivoting motion
- 20: First frame part
- 21: Snap
- 22: Snap window
- 23: Recess
- 24: bottom z-locator frame part
- 25: Stop
- 26: Face
- 27: Base
- 28: Bump
- 30: Rib
- 32: Surrounding edge of front housing shell 11
- 33: Surface
- 35: Surrounding edge of back housing shell 12
- 36: Plateau
- 38: Deepening
- 39: Surface
- 50: Arrow
- 101: Channel in front housing shell
- 102: Channel in front housing shell
- 103: Channel in front housing shell
- X: X-coordinate direction
- Y: Y-coordinate direction
- Z: Z-coordinate direction

## Claims

1. A camera assembly (10) for a driver monitoring system (1),
the camera assembly (10) being defined by a front housing shell (11) and a back housing shell (12),
a surrounding edge (32) of the front housing shell (11) having formed at least two top z-locators (15), at least two bottom z-locators (16), a first fixation element (17) and a second fixation element (18),
the first fixation element (17) reaching into a snap window (22) and the second fixation element (18) reaching into an opposing snap window (22) of a first frame part (20),
**characterized by**
at least two ribs (30) formed on a surrounding edge (35) of the back housing shell (12);
a bottom z-locator frame part (24) defined by a base (27) and two snaps (21) extending upwardly from the base (27), each snap (21) having formed therein a snap window (22) into which the first fixation element (17) and the second fixation element (18) respectively reach; and
at least two recesses (23) formed in the base (27), each of which receiving one of the at least two ribs (30) once the camera assembly (10) is attached to the bottom z-locator frame part (24).

2. The camera assembly (10) as claimed in claim 1, wherein the base (27) of the bottom z-locator frame part (24) has formed at least two plateaus (36), each of which contacts one of the bottom z-locators (16) on the surrounding edge (35) of the front housing shell (11) and thereby locate the camera assembly (10) in the Z-coordinate direction (Z).

3. The camera assembly (10) as claimed in any one of the preceding claims, wherein channels (101, 102, 102) are formed in the front housing shell (11) for locating the camera assembly (10) in the X-coordinate direction (X) and the Y-coordinate direction (Y).

4. The camera assembly (10) as claimed in any one of the preceding claims, wherein at least one bump (28) is formed on the base (27) of the bottom z-locator frame part (24) and the surrounding edge (35) of the back housing shell (12) has at least one deepening (38) formed therein, wherein the at least one bump (28) reaches into the at least one deepening (38) once the camera assembly (10) sits on the bottom z-locator frame part (24).

5. The camera assembly (10) as claimed in claim 4, wherein the at least one bump (28) of the base (27) of the bottom z-locator frame part (24) is in a form fitting cooperation with the at least one deepening (38) of the surrounding edge (35) of the back housing shell (12).

6. The camera assembly (10) as claimed in any one of the preceding claims, wherein the first frame part (20) and the bottom z-locator frame part (24) are connected to each other and hold the camera assembly (10) in an operating position.

7. A driver monitoring system (1) for a vehicle (2) comprising a camera assembly (10) according to any one of the preceding claims.

8. A vehicle (2) with a driver monitoring system (1) comprising a camera assembly (10) according to any one of the claims 1 to 6.
